Europäisches Patentamt

European Patent Office

Office européen des brevets

(19)

(11) EP 1 371 739 A1

(12) EUROPEAN PATENT APPLICATION
published in accordance with Art. 158(3) EPC

(43) Date of publication:
17.12.2003 Bulletin 2003/51

(51) Int Cl.7: **C22B 9/02**, C22B 11/02,
C22B 13/02, C22B 15/00,
C22B 17/02, C22B 19/32,
C22B 21/06

(21) Application number: 01271115.6

(22) Date of filing: 13.12.2001

(86) International application number:
**PCT/JP01/10957**

(87) International publication number:
**WO 02/050320 (27.06.2002 Gazette 2002/26)**

(84) Designated Contracting States:
**AT BE CH CY DE DK ES FI FR GB GR IE IT LI LU
MC NL PT SE TR**

(30) Priority: 18.12.2000 JP 2000384143
07.11.2001 JP 2001342329

(71) Applicant: **Mitsui Mining & Smelting Co., Ltd.
Tokyo 141-8584 (JP)**

(72) Inventors:
• **TANNO, Fumio
MITSUI MINING & SMELTING CO. LTD.
Ageo-shi, Saitama 362-0021 (JP)**
• **MATSUZAKI, Kenji
MITSUI MINING & SMELTING CO. LTD.
Ageo-shi, Saitama 362-0021 (JP)**

(74) Representative: **Pätzold, Herbert, Dr.-Ing.
Steubstrasse 10
82166 Gräfelfing (DE)**

(54) **PROCESS FOR PURIFYING ZINC AND RECTIFYING COLUMN FOR PURIFYING ZINC**

(57) A process of purifying zinc comprising the steps of introducing the zinc containing impurities into a rectification column having a plurality of purification stages: and distilling the zinc in the rectification column under a reduced pressure for removing the impurities, thereby obtaining the zinc with a higher purity. The following effects can be obtained by conducting the zinc purification in accordance with the present invention. (1) The operation under a reduced temperature is possible, thereby achieving the energy saving. (2) The reduction of the purification efficiency probably due to the droplet accompaniment is prevented, and the difference of the vapor pressures between the metals increases under the reduced pressure, thereby easily conducting the separation. Accordingly, the purification with efficiency the same as or more than that of the conventional purification can be made possible with the rectification column having the smaller number of the trays. Accordingly, the use of the downsized rectification column and the reduction of the construction cost are attained. (3) The rise of the mechanical strength of the rectification column for performing the purification under the reduced pressure increases durability of the rectification column and resistance to the natural disasters. (4) The lower operation temperature lessens the deterioration of the trays to make their lives longer. This zinc purification may be conducted by employing either of the rectification column including the lead column (21) and the cadmium column (31) or the rectification column including only the cadmium removal column. In the former, the crude zinc raw material containing the lead and the cadmium as the impurities is purified to provide the rectified zinc (SHG) with a purity (99.99 % or more) having been removed of the lead and the cadmium. In the latter, the zinc containing the lead removed of the cadmium is obtained. The lead may be desirably contained in the zinc obtained by the latter process depending on use. The target zinc in the latter can be obtained with the lower cost and the higher operation efficiency because the install of the lead column and the fuel consumption are not required.

FIG. 3

**Description**

Technical field

The present invention relates to a process for purifying metal, especially, zinc which can achieve energy saving, equipment miniaturization and cost reduction, and a rectification column usable in the process.

Background Art

Electrolytic zinc (purest zinc) having purity of 99.99 % or more is produced after the electrolytic refining. On the other hand, distilled zinc (PW) having purity of 98.5 % or more is produced after the pyrometallurgy of zinc (ISP, vertical distillation, horizontal' distillation, electric heat distillation). Such zinc having lower purity (hereinafter referred to as "crude zinc" when supplied to a rectification column) is purified in the rectification column to provide purified zinc (SHG) having purity of 99.99 % or more which is nearly equal to the grade of the electrolytic zinc. Impurity metals such as metal lead and metal cadmium are contained in the distilled zinc obtained by the pyrometallurgy, and the distilled zinc is used for molten zinc plating of bridges, telegraph poles and guardrails. Because of the higher purity of the rectified zinc obtained by the rectifying the distilled zinc, the rectified zinc is used for various purposes (for example, electroplating and continuous plating of automobile body) and enjoys an increasing demand in the broader market.

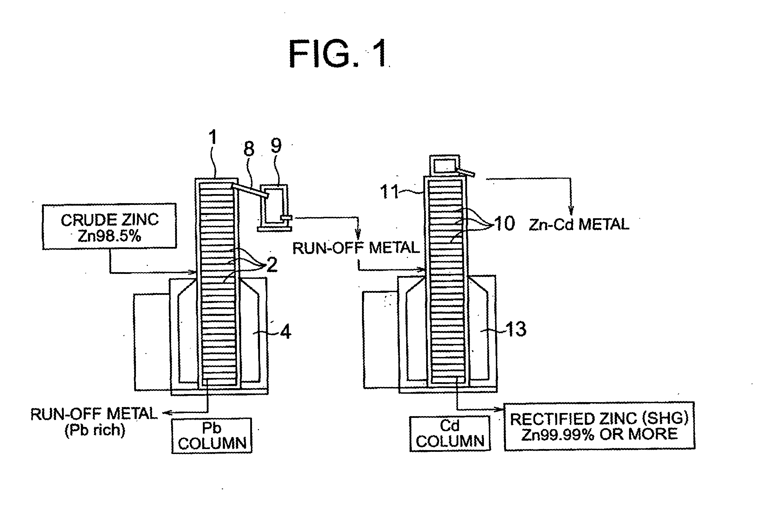

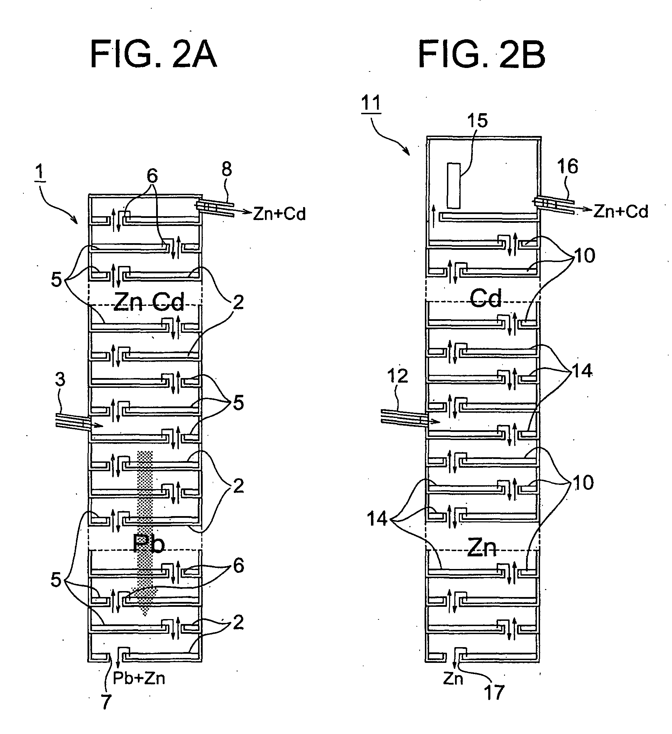

Fig. 1 shows a conventional rectification column used in the rectification step for purifying zinc. The rectification column generally consists of a rectification column for removing lead, iron and copper (lead column) and a rectification column for removing cadmium (cadmium column). Fig.2a is a partially broken and enlarged view of the lead column, and Fig.2b is a partially broken and enlarged view of the cadmium column.

The lead column 1 has a plurality of stacked trays 2 (under the present situation, 24 trays only in a reflux section over a crude zinc supply port) and has the crude zinc supply port 3 at the central side surface thereof through which the crude zinc is supplied into the lead column 1. The crude zinc obtained by smelting crude ore contains about 98.5 % of zinc, and lead and cadmium as main impurities.

A combustion chamber 4 is formed around the lead column 1 lower than the zinc supply port 3. Molten zinc 5 on one tray 2 flows over an upward weir 6 to move to another tray 2 immediately below the former tray 2. On the other hand, molten zinc 5 on the tray 2 inside of the combustion chamber 4 is vaporized by the heating, and the vaporized zinc vapor moves to the upward trays 2. The zinc vapor having moved in the direction of the upward trays 2 is gradually cooled after the zinc vapor reaches above the combustion chamber 4, and part of the zinc vapor is condensed on the trays 2 again. The condensed molten zinc 5 again flows over the upward weir 6 of the tray 2 to move to the tray 2 immediately below the former tray 2. The molten zinc reaches to the trays 2 inside of the combustion chamber 4 by the repetition thereof, and vaporized again by the heating in the combustion chamber 4.

The metal having the lowest vapor pressure among the zinc (main component), the lead and the cadmium (impurities) is the lead. The lead less volatile than the zinc and the cadmium likely remains on the trays 2 inside of the combustion chamber 4. Accordingly, the zinc containing a relatively larger amount of the lead reaches to the lowest tray 2 by the repetition of the vaporizations and the condensations to be discharged through a lead discharge port 7.

The zinc vapor containing the cadmium vapor and reaching to the highest tray 2 is discharged through an outward extending zinc vapor discharge port 8 at the top portion of the lead column 1 to be introduced into a condenser 9. The zinc vapor containing the cadmium vapor is cooled in the zinc vapor discharge port 8 and the condenser 9 to be converted into the molten zinc containing the cadmium.

The molten zinc is supplied into the cadmium column 11 having 61 stacked trays 10 through a molten zinc supply port 12 formed nearly at the middle of the 61 stacked trays 10 of the cadmium column 11.

Similarly to the lead column, a combustion chamber 13 is formed around the cadmium column 11 lower than the molten zinc supply port 12. Because the zinc having the lower vapor pressure than the cadmium is less volatile, the molten zinc 14 easily moves to the lower trays 10 when the molten zinc in the cadmium column 11 is heated by the combustion chamber 13 similarly to the lead column. On the other hand, the cadmium converted into the vapor together with the zinc vapor reaches to the highest tray 10 and is cooled by a condenser 15 in the space over the highest tray 10 to be converted into a molten state. The cadmium is then discharged out of the cadmium column 11 through a zinc-cadmium discharge port 16.

Since the cadmium is discharged out of the column in this manner, pure zinc scarcely containing the cadmium exists on the lower trays 10 of the cadmium column 11 and is discharged through a zinc discharge port 17 formed on the bottom plate of the cadmium column 11.

The purity of the pure zinc obtained by the above process is 99.99 % or more and is satisfactory.

However, the purification from the crude zinc to the rectified zinc is conducted at higher temperatures (ordinarily, about 900 to 1100°C) for elevating the rectification efficiency and requires a large amount of energy. In the current zinc purification, as mentioned earlier, the purity of the pure zinc can be increased to 99.99 % or more only by using the 24 trays in the reflux section of the lead column and the 61 trays in the cadmium column. When the lager number of these trays is required, the large-scaled equipments and the rise of the fabrication cost are inevitable.

Due to the thermal deterioration of the rectification column having therein the stacked trays, the trays are required to be replaced and stacked about once in three years. The rectification column made of brick has the disadvantages including the inferior mechanical strength and the weakness to natural disasters such as earthquake.

Similar defects are pointed out in the purification using a rectification column made of a metal other than the zinc.

Disclosure of Invention

An object of the present invention is to provide a purification process of metal such as zinc and a rectification column used for the process by means of overcoming the above defects of the prior art. The process can be operated with the lower energy, and with the lower cost and the higher operation efficiency by using the compact rectification column having the higher mechanical strength.

The present invention is a process of purifying metal such as zinc including the steps of introducing the zinc containing impurities into a rectification column having a plurality of purification stages and distilling the metal in the rectification column under a reduced pressure for removing the impurities, thereby obtaining the zinc with a higher purity; and a rectification column usable in the process.

In the purification process of the metal, especially, the purification process of the metal of the present invention, the purification of the zinc is conducted in the rectification column for zinc purification such as a lead column and a cadmium column in which at least of one of them has the reduced pressure. The following effects can be obtained by conducting the metal purification, especially, the zinc purification under the reduced pressure.

1. The zinc purification can be conducted even at the lower vapor pressure of the metal such as the zinc compared with that of the purification under the atmospheric pressure because the inner pressure of the rectification column is lowered under the reduced pressure to vaporize the metal. In other words, the zinc purification can be conducted with weaker heating to save the energy.

2. The conventional vaporization of the molten metal under the atmospheric pressure is conducted under the boiling condition so that bubbles are vigorously generated from inside of the molten metal. Accordingly, the vaporized metals scatter in all directions from the surface of the molten metal in the form of droplets wherein other metals with a lower boiling point which does not basically vaporize are accompanied with the vaporized metal, thereby leaving the surface (droplet accompaniment). The droplet accompaniment lowers the separation efficiency or the purification efficiency. The increase of the trays is required to overcome this defect.

On the other hand, in the purification under the reduced pressure of the present invention, the distillation can be conducted without boiling because the sufficient evaporation rate is achieved without the boiling. Accordingly, the separation efficiency is increased because no or scarce droplet accompaniment of the vaporized metals takes place or the lower boiling point metals are not accompanied. Further, the separation can be more easily achieved because the vapor pressures between the metals significantly differ from each other under the reduced pressure. This means that a similar degree of the purification can be achieved by using the number of the trays less than that of the conventional rectification column. Accordingly, the use of the compact rectification column and the reduction of the construction cost can be attained by the present invention.

Further, depending on the conditions, the separation of the impurities may be possible without the heating of the rectification column. That is, the evaporation heat required for the evaporation of the zinc or the impurities can be compensated with the sensible heat of the heated zinc supplied to the rectification column. The non-necessity of the rectification column heating not only saves the fuel cost but also requires no facilities for heating the rectification column. Further, the non-necessity is advantageous in cost and contributable for decreasing the occupied area.

3. For conducting the reduced pressure purification, a degree of sealing of the rectification column should be increased. For the strong sealing, the material with the higher strength is necessarily needed to fabricate the rectification column, thereby enabling the operation with the rectification column having the higher mechanical strength and the durability to earthquake.

4. Because of the lower operation temperatures, the trays are scarcely deteriorated and have longer lives.

In the present invention, at least one of the rectification columns used for the purification of the metal such as the zinc is operated under the reduced pressure. In the zinc purification, the lead column and the cadmium column are generally employed. In the present invention, the operation is desirably conducted with both of the lead column and the cadmium column under the reduced pressure, and the above effects can be obtained even if either of the lead column or the cadmium column is used under the reduced pressure. In place of, or in addition to using the both columns, the pressure in a line connecting the both columns may be reduced so that at least one of the both columns may be made under the reduced pressure indirectly.

In the purification of the zinc containing the cadmium and the lead as the main impurities, the purification may be conducted by using only the cadmium column (the cadmium column will also be referred to as cadmium removing column) without the lead column because the zinc vapor contains lower concentration of the cadmium.

A degree of the reduced pressure is not restricted, and even a smaller degree of the reduced pressure generates the effects accordingly. The preferable degree of the reduced pressure is from 0.1 to 5000 Pa. The number of the trays in the reflux section of the lead column required for obtaining the purified zinc having, for example, a purity of 99.99 % which is the same to the conventional zinc purification process is three under the pressure of 20 Pa, and can be significantly reduced from 24 under the atmospheric pressure. The number of the total trays in the cadmium column required for obtaining the purified zinc having a purity of 99.99 % which is the same to the conventional zinc purification process is 26 under the pressure of 1260 Pa, and 18 under the pressure of 190 Pa. Both of them are significantly reduced from 61 under the atmospheric pressure.

The material used for the rectification column is any material which endures the higher degree of the reduced pressure and does not react with a metal such as zinc and impurities. A metal or a metal alloy such as stainless steel or a refractory substance such as graphite and SiC is preferably employed.

The means for reducing the pressure in the rectification column is not especially restricted, and any conventional means such as suction with a pump may be used without modification. The position of the rectification column to be connected with the sucking means such as the pump is selected such that the metals in the rectification column are not sucked, and a trap is preferably used depending on necessity.

The zinc purified in the process of the present invention and containing the impurity is not especially restricted. The present process can be preferably applied to, for example, the crude zinc having a zinc content of about 98.5 % in weight and containing lead and cadmium as main impurities after the smelting process in the conventional zinc smelting.

The following effects can be obtained when the zinc purification is conducted under the reduced pressure in accordance with the present invention compared with that under an atmospheric pressure.

1. The operation under a reduced temperature is possible, thereby achieving the energy saving.

2. The reduction of the purification efficiency probably due to the droplet accompaniment is prevented, and the difference of the vapor pressures between the metals increases under the reduced pressure, thereby easily conducting the separation. Accordingly, the purification with efficiency the same as or more than that of the conventional purification can be made possible with the rectification column having the smaller number of the trays. Accordingly, the use of the downsized rectification column and the reduction of the construction cost are attained.

3. The rise of the mechanical strength of the rectification column for performing the purification under the reduced pressure increases durability of the rectification column and resistance to the natural disasters.

4. The lower operation temperature lessens the deterioration of the trays to make their lives longer.

The zinc purification may be conducted by employing either of the rectification column including the lead column and the cadmium column or the rectification column including only the cadmium removal column. In the former, the crude zinc raw material containing the lead and the cadmium as the impurities is purified to provide the rectified zinc (SHG) with a purity (99.99 % or more) having been removed of the lead and the cadmium. The lead may be desirably contained in the zinc obtained by the latter process depending on use. The target zinc in the latter can be obtained with the lower cost and the higher operation efficiency because the install of the lead column and the fuel consumption are not required.

The molten zinc supplied to the cadmium column or the cadmium removal column maintained under the reduced pressure in the present invention is usually heated to the higher temperature of 700 °C or more. The temperature is frequently high enough to initiate the spontaneous evaporation so that the rectification in the cadmium column or the like can be conducted without heating. The non-necessity of the heating not only saves the fuel cost but also removes the necessity of installation of the heating facility, and further generates the advantage in cost and contributes to the reduction of the occupied area.

Brief Description of Drawings

Fig.1 is a schematic view showing a rectification column in a rectification process for purifying zinc conventionally employed.

Fig.2 is a partially broken enlarged view of the rectification column of Fig.1; and Fig.2a is a partially broken enlarged view of the lead column, and Fig.2b is a partially broken enlarged view of the cadmium column.

Fig.3 is a schematic view illustrating a rectification column usable in the process of the present invention.

Fig.4a is an equilibrium diagram of a binary system containing zinc and cadmium in vapor and liquid phases, and Fig.4b are enlarged views of Fig.4a under an atmospheric pressure and a reduced pressure.

Fig.5 is a sectional view of a test apparatus used for a purification test of zinc alloy under a reduced pressure of Example.

Fig.6 is a graph showing temperature dependency of a evaporation rate of a zinc alloy in Example 2.

Fig.7 is a graph showing temperature dependency of lead concentration in a gas phase.

Fig.8 is a graph showing temperature dependency of cadmium concentration in a gas phase.

Fig. 9a is a graph showing temperature dependency of distillation efficiency of lead, and Fig.9b is a diagram showing variables required for calculating the temperature dependency.

Fig.10a is a graph showing temperature dependency of distillation efficiency of cadmium, and Fig.10b is a diagram showing variables required for calculating the temperature dependency.

Fig. 11 is a graph showing the numbers of trays in a reflux portion and a combustion chamber in a lead column 'at a plurality of temperatures.

Fig. 12 is a graph showing the numbers of trays in a reflux portion and a combustion chamber in a cadmium column at a plurality of temperatures.

Fig.13 is a graph showing the numbers of trays in a reflux portion and a combustion chamber in a cadmium removal column at a plurality of temperatures.

Best Mode for Implementing Invention

Although an example of a rectification column usable in the present invention will be described, the present invention shall not be deemed to be restricted thereto.

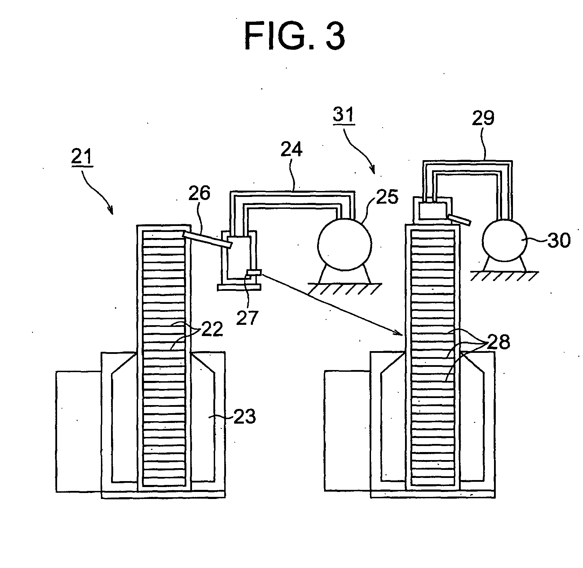

Fig.3 is a schematic view illustrating a rectification column usable in the process of the present invention.

A lead column includes therein stacked trays 22, and a supply port (not shown) for crude zinc (feed metal) is formed on the nearly middle part of a plurality of the trays 22. The crude zinc is supplied into the lead column 21 through the supply port.

A combustion chamber 23 is installed around the lead column 21 lower than the crude zinc supply port, and heats inside of the lead column 21. A pump 25 for the lead column 25 connected to the upper section of a condenser 27 of the lead column through a conduit 24 maintains the inside of the lead column 21 under a reduced pressure.

The supplied zinc on the tray 22 is heated by the combustion chamber 23 to be volatilized. Because of the reduced pressure in the lead column 21, the volatilization of the metal proceeds with relatively weaker heating. Similarly to the prior art shown in Fig. 1, the lead is removed, and the zinc vapor containing a slight amount of cadmium vapor is supplied to the condenser 27 through a zinc vapor discharge port 26 formed on the upper side surface of the lead column 21. The zinc vapor containing the cadmium vapor is cooled in the zinc vapor discharge port 26 and the condenser 27 to be converted into molten zinc containing cadmium.

The molten zinc is supplied into a cadmium column 31, and similarly to the prior art, the zinc is separated from the cadmium. The cadmium column has stacked trays 28 therein and a pump 30 for the cadmium column connected to the upper portion of the cadmium column through a conduit 29. Also in this case, the volatilization of the metal proceeds with relatively weaker heating because of the reduced pressure in the cadmium column 31, thereby easily performing the zinc purification to provide the rectified zinc (SHG).

In another embodiment of the present invention, the crude zinc may be supplied into the cadmium (removal) column without mounting the lead column 21, thereby obtaining distilled zinc having lower concentration of cadmium (Removed CdPW).

Then, the process of the present invention will be described referring to an equilibrium diagram.

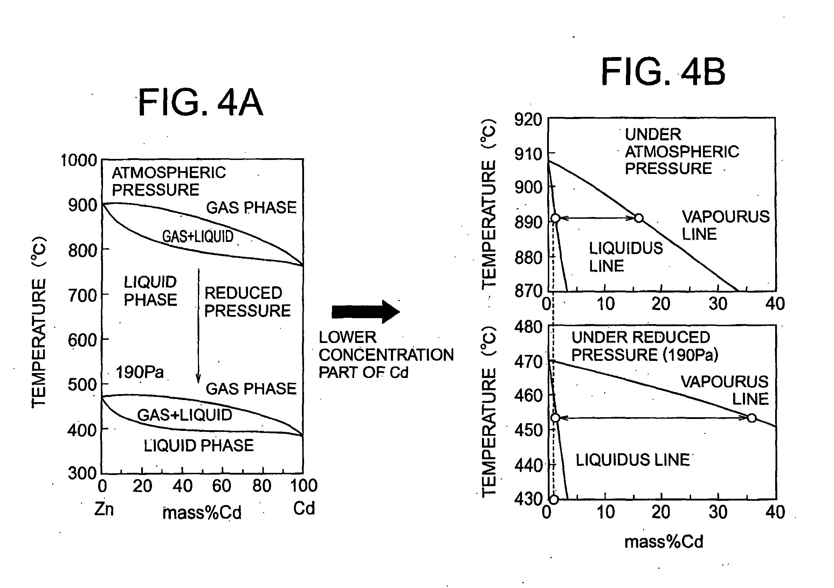

Fig. 4a is an equilibrium diagram of a binary system containing zinc and cadmium in vapor and liquid phases, and Fig. 4b is partially enlarged views of Fig. 4a. The vapourus line and the liquidus line under the atmospheric pressure are cited from J. Rumusden, "Thermodynamics of Alloys", and the vapourus line and the liquidus line under the reduced pressure are calculated from a relational expression among the total pressure, the temperature and the composition by employing the thermodynamic data.

As shown in Fig.4a, the zinc and the cadmium reach to the gas-liquid equilibrium at about 800 to 900 °C under the atmospheric pressure. The equilibrium temperature gradually lowers with the decrease of the pressure from the atmospheric pressure, and the gas-liquid equilibrium is reached at about 400 to 470 °C under about 190 Pa. This means that the reduced pressure enables the zinc purification by the lower temperature distillation in which the cadmium is removed from the mixture of' zinc and cadmium.

As apparent from Fig. 4b, when the spacing between the vapourus line and the liquidus line at the higher temperature, for example, at 891°C under the atmospheric pressure is compared with the spacing between the vapourus line and the liquidus line at 453°C and at about 190 Pa having the same cadmium concentration, the spacing is broader at the lower temperature. This means that the cadmium concentration in the gas phase evaporated from the liquid phase increases so that the distillation efficiency is elevated.

Then, the energy balance in the lead lower for the zinc purification will be described. The energy provided to the lead column includes the direct hearting of the lead column by the combustion chamber and the preheating of the zinc and the air supplied to the lead column.

In the conventional operation under the atmospheric pressure, the crude zinc is supplied to the lead column after the preheating to 590°C. The energy required for the preheating is $8.27 \times 10^6$ kcal/day. On the other hand, for operating the process of the present invention at 500°C, the crude zinc may be preheated only to 500°C , and the energy required for the preheating is $7.25 \times 10^6$ kcal/day.

In the conventional operation under the atmospheric pressure, air is supplied to the lead column after the preheating to 790°C. The energy required for the preheating is $1.49 \times 10^7$ kcal/day. On the other hand, for the operation at 500°C, air may be preheated only to 200°C, and the energy required for the preheating is $2.57 \times 10^6$ kcal/day.

Further, the energy required for heating the lead column by the combustion chamber in the conventional operation is $6.59 \times 10^7$ kcal/day, and the energy required for the operation at 500°C is $4.67 \times 10^7$ kcal/day. When the energies required for heating the lead column with the combustion chamber is converted into the amounts of LPG, the former is 6000 kg/day and the latter is 4250 kg/day. The energy reduction of about 30 % in the lead column is achieved by using the purification under the reduced pressure.

The excess energy in the conventional operation is, after the heating of the metals, is discharged from the lead column in the form of radiation heat, high temperature exhaust gas, high temperature zinc-cadmium vapor and high temperature molten zinc. Accordingly, in addition to the larger energy supplied, the burdensome operation of cooling the discharge metal is necessary. On the other hand, the less energy supplied in the present invention reduces the radiation heat from the lead column, and enables the easier post-treatment.

Examples

Although Examples of processes of zinc purification in accordance with the present invention will be described, the present invention shall not be restricted thereto.

Example 1

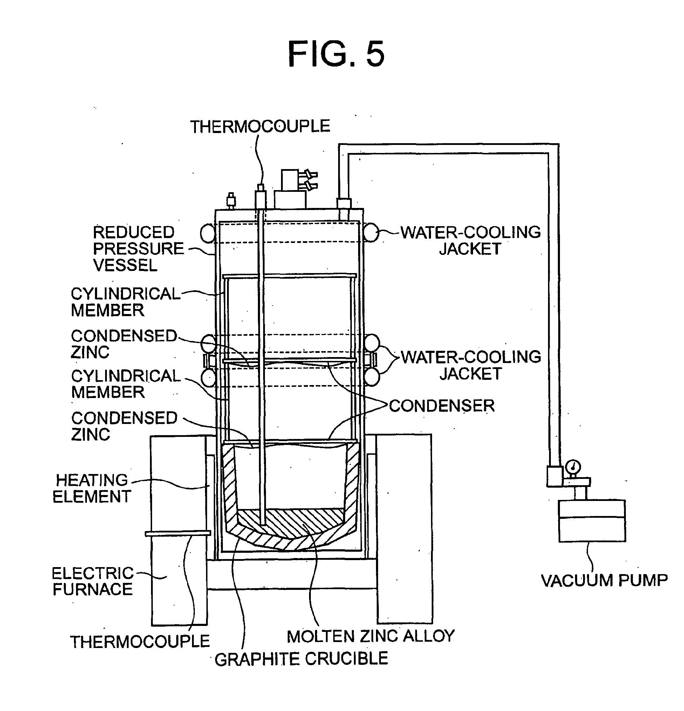

A purification test of zinc alloy under a reduced pressure was conducted by employing a test apparatus shown in Fig. 5.

Zinc alloy (zinc-lead 1.2 % in weight-cadmium 0.084 % in weight) was placed in a graphite crucible having a cylindrical shape with a bottom 'accommodated in a cylindrical reduced pressure vessel made of stainless steel. The lower periphery of the reduced pressure vessel was enwrapped with a heating element, and was settled in an electric furnace. A first thermocouple was placed from the top surface of the reduced vessel to reach to the zinc alloy, and a second thermocouple was placed to reach to the heating element so that the temperature of the zinc alloy could be measured by using the both thermocouples.

A plate-like condenser having an opening at a central portion thereof was placed on the top periphery of the crucible, and a thin cylindrical member was placed on the condenser. Further, the condenser, the cylindrical member and the condenser were placed on the cylindrical member in this turn. Three water-cooling jackets having a doughnut shape were mounted around the reduced pressure vessel at the positions corresponding to the upper and the lower positions of the central condenser and the upper position of the uppermost condenser.

A vacuum pump was connected to the opening of the top surface of the reduced pressure vessel through a conduit for the pump. The thermal treatment of the zinc alloy in the reduced pressure vessel was ready at a specified temperature and a specified degree of reduced pressure' by driving the vacuum pump and supplying electricity to the electric furnace.

In this Example, the lead concentration in the condensed zinc trapped in the condenser was investigated by changing the temperature and the degree of the reduced pressure as shown in Table 1. The results are shown in Table 1.

Comparative Example

The lead -concentration was estimated in accordance with the operation results of the rectification column as follows.

The lead concentration in the vapor zinc was shown in Table 1 under the same conditions except that the temperature is 907°C and the pressure is an atmospheric pressure (1000000 Pa).

As apparent from the results of Table 1, the lead concentration in the condensed zinc was reduced with the reduction of the temperature. It is conjectured that the difference of the vapor pressures between the lead and the zinc increases with the decrease of the temperature so that a larger amount of the lead evaporated than the zinc.

Table 1

| Temperature (°C) | Degree of Reduced Pressure (Pa) | Pb (ppm) |
|---|---|---|
| 460 | 190 | 27 |
| 500 | 190 | 38 |
| 580 | 190 | 104 |
| 907 | 100000 | 5200(estimated) |

Example 2

After experiments the same as that of Example 1 were repeated at a plurality of temperatures, the compositions of the condensed zinc (gas phase) trapped in the condenser and the zinc (liquid phase) remaining in the crucible were analyzed.

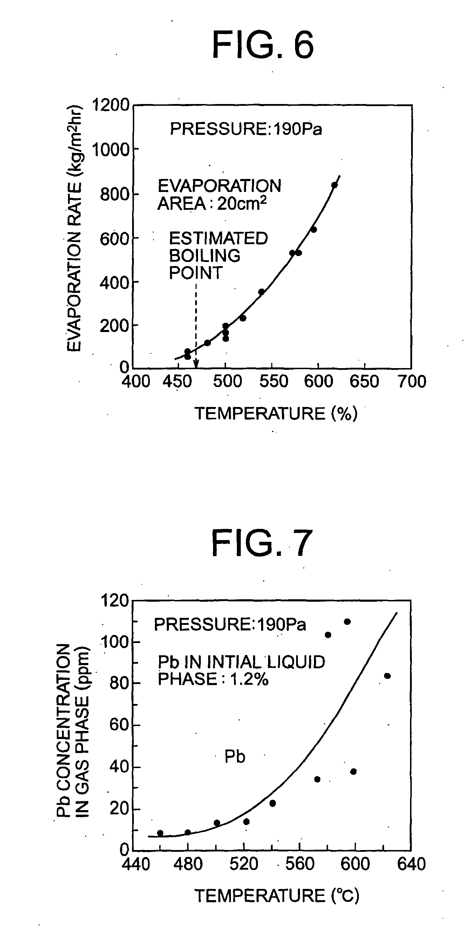

The evaporation rate was calculated by using an equation (1) to provide the temperature dependency of the evaporation rate shown in Fig.6.

$$\text{Evaporation Rate (kg/m}^2\text{hr)} = (\text{Amount of Evaporation})/$$

$$(\text{Evaporation Area x Evaporation Time}) \qquad (1)$$

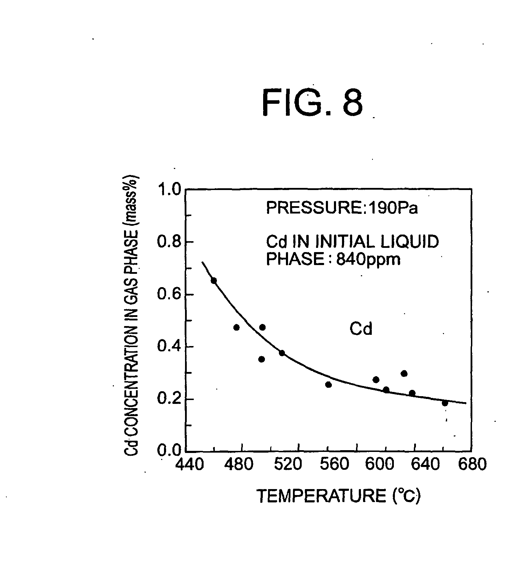

From the values of the compositions of the condensed zinc and the remaining zinc, the temperature dependencies of the lead concentration and the cadmium concentration in the evaporated zinc were calculated and shown in graphs of Figs.7 and 8, respectively.

As apparent from these graphs, the lead concentration in the gas phase increased with the temperature increase, and the cadmium concentration in the gas phase decreased with the temperature increase.

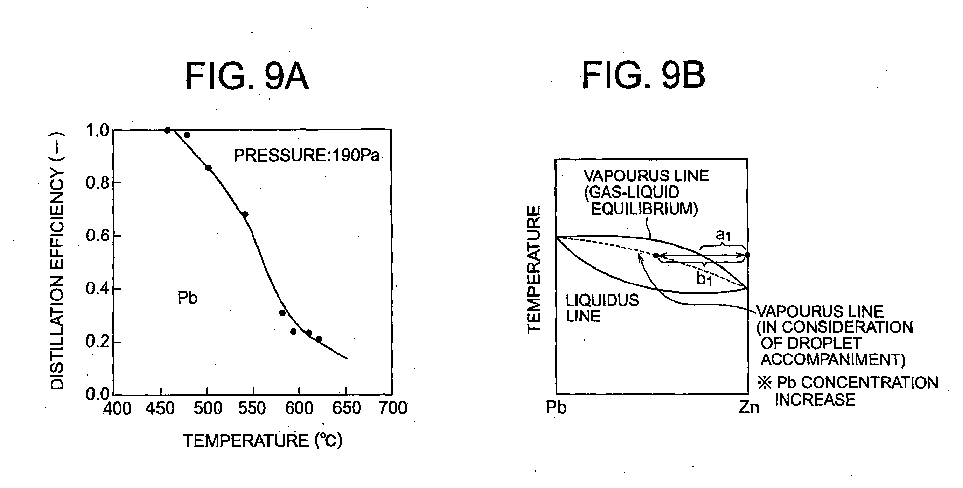

The distillation efficiencies of the lead at a plurality of temperatures were calculated by using an equation (2), and the results were shown in a graph of Fig.9a. "a1" and "b1" are defined in Fig.9b.

$$\text{Distillation Efficiency of Lead} = (\text{Lead Concentration in Gas}$$

$$\text{Phase at Gas-Liquid Equilibrium}) / (\text{Lead Concentration in}$$

$$\text{Gas Phase in Experiment}) = a1/b1 \qquad (2)$$

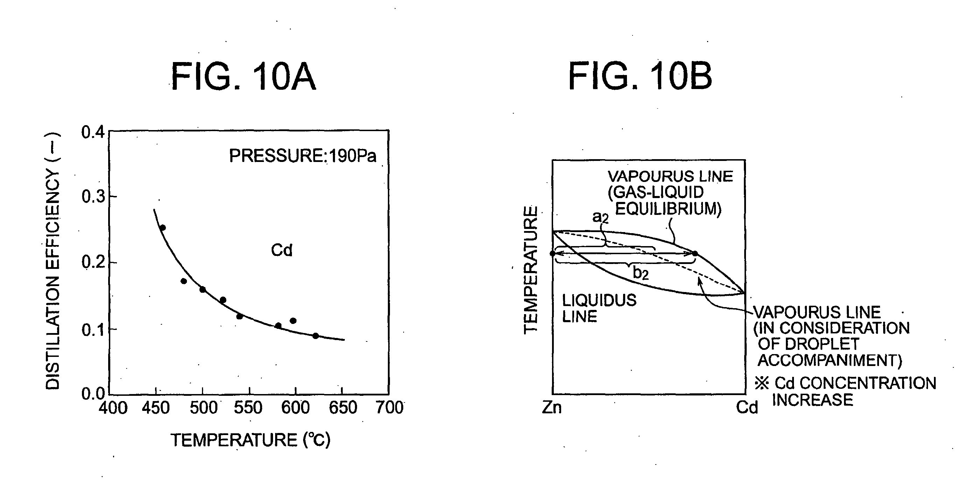

Then, the distillation efficiencies of the cadmium at a plurality of temperatures were calculated by using an equation (3), and the results were shown in a graph of Fig.10a. "a2" and "b2" are defined in Fig. 10b.

$$\text{Distillation Efficiency of Cadmium} = (\text{Cadmium}$$

$$\text{Concentration in Gas in Experiment}) / = (\text{Cadmium}$$

$$\text{Concentration in Gas Phase at Gas-Liquid Equilibrium}) =$$

$$a2/b2 \qquad (3)$$

Analysis of Lead Column and Cadmium Column

The lead column and the cadmium column under the reduced pressure were analyzed (number of trays and thermal rating) based on the data obtained in Examples.

1. Numbers of Trays in Reflux Section and Combustion Chamber of Lead Column and Reduction Rate of Fuel

The gas-liquid composition of each tray was determined by using a zinc-lead gas-liquid state diagram revised with the material balance and the distillation efficiency.

Crude zinc heated to 590°C and containing 1.3 % of lead was supplied at 50 ton/day into the zinc vapor supply port of the lead column having a degree of reduced pressure at 190 Pa. The numbers of the trays of the combustion chamber and the reflux section of the lead column, and amounts of fuel required for adjusting the lead content at the top of the lead column to be 20 ppm at the respective temperatures of 620°C, 660°C, 700°C and 740°C were calculated.

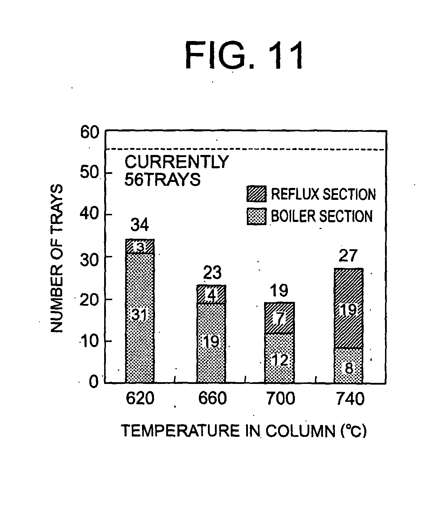

Under the existing conditions (under atmospheric pressure), the number of the trays required for adjusting the lead content at top of the lead column to be 20 ppm was 56. The trays required in this Example were 34, 23, 19 and 27 in the order of the above temperatures as shown in Fig. 11, and it was apparent that the number of the trays could be made minimum in the operation at 700°C. The reduction rates of the fuel at the respective temperatures were shown in Table 2, and the operation at 620°C was preferable for reducing the fuel.

Under the conditions, the run-off metal containing 4.5 % of the lead flowed out through the lead discharge port at a rate of 15 ton/day, and the zinc-cadmium vapor containing 20 ppm of the lead was discharged through the zinc vapor discharge port of the lead column at a rate of 35 ton/day.

Table 2

| Operation Temperature (°C ) | 620 | 660 | 700 | 740 |
|---|---|---|---|---|
| Reduction Rate (%) | 28.0 | 24.8 | 21.4 | 17.7 |

2. Numbers of Trays in Reflux Section and Combustion Chamber of Cadmium Column and Reduction Rate of Fuel

The gas-liquid composition of each tray was determined by using a zinc-cadmium gas-liquid state diagram revised with the material balance and the distillation efficiency, and the required trays were calculated from the required evaporation area and by using the Ponchon-Savarit method.

Molten zinc heated to 700°C and containing 1000 ppm of cadmium was supplied at 70 ton/day into the molten zinc supply port of the cadmium column having a degree of reduced pressure at 190 Pa. The numbers of the trays of the combustion chamber and the reflux section of the cadmium column, and amounts of fuel required for adjusting the cadmium content in the obtained SHG to be 20 ppm at the respective temperatures of 460°C and 500°C were calculated.

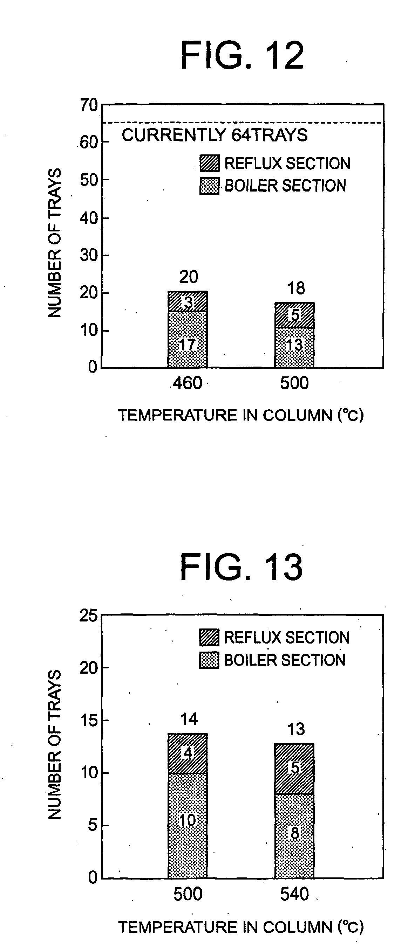

Under the existing conditions (under atmospheric pressure), the number of the trays required for adjusting the cadmium content to be 20 ppm was 64. The required trays in this Example were 20 and 18 in the order of the above temperatures as shown in Fig. 12, and the number of the trays could be made below one third.

In this Example, as mentioned earlier, in spite of no heating of the combustion chamber, the pure zinc (SHG) at 500°C containing 20 ppm of the cadmium was discharged through the zinc discharge port positioned at the bottom surface of the cadmium column at a rate of 69.3 ton/day by supplying the molten zinc heated to about 700°C to the cadmium column.

All the latent heat required for the evaporation could be provided by the temperature difference between the molten zinc supplied and the molten zinc in the rectification column (700°C and 500°C), and the operation could be conducted without heating the cadmium column, and the fuel reduction rate of 100 % was achieved in the operation under the reduced pressure.

Analysis of Cadmium Removal Column

In this Example, the treatment of passing the crude zinc through the lead column and then through the cadmium column shown in Fig.3 was not conducted, and the acquirement of the zinc with the reduced amount of the cadmium was attempted by passing the zinc only through the cadmium column (referred to as "cadmium removal column" in this analysis).

The gas-liquid composition of each tray was determined by using a zinc-cadmium gas-liquid state diagram revised with the material balance and the distillation efficiency, and the required trays were calculated from the required evaporation area and by using the Ponchon-Savarit method.

Molten zinc heated to 700°C and containing 700 ppm of cadmium was supplied at 100 ton/day into the molten zinc supply port of the cadmium column having a degree of reduced pressure at 190 Pa. The numbers of the trays of the combustion chamber and the reflux section of the cadmium column, and amounts of fuel required for adjusting the cadmium content in the obtained SHG to be 100 ppm at the respective temperatures of 500°C and 540°C were calculated.

The numbers of the trays required for adjusting the cadmium content to be 100 ppm were 14 and 13 in the order of the above temperatures as shown in Fig. 13.

In this Example, as mentioned earlier, in spite of no heating of the combustion chamber, the distilled zinc removed of the cadmium at 540°C containing 100 ppm of the cadmium was discharged through the zinc discharge port positioned at the bottom surface of the cadmium column at a rate of 99.4 ton/day by supplying the 'molten zinc heated to about 700°C to the cadmium column.

**Claims**

1.  A process of purifying zinc comprising the steps of

    introducing the zinc containing impurities into a rectification column having a plurality of purification stages: and distilling the zinc in the rectification column under a reduced pressure for removing the impurities; thereby obtaining the zinc with a higher purity.

2.  The process of purifying the zinc as defined in claim 1, wherein a degree of the reduced pressure is from 0.1 to 5000 Pa.

3.  The process of purifying the zinc as defined in claim 1, wherein the rectification column includes a lead column and a cadmium column, and after the zinc containing lead and cadmium as the impurities is introduced into the lead column for lead removal, the zinc containing the cadmium is introduced into the cadmium column for cadmium removal.

4.  The process of purifying the zinc as defined in claim 1, wherein the rectification column includes a cadmium removal column, and the zinc containing lead and cadmium as the impurities is introduced into the cadmium removal column for cadmium removal, thereby obtaining the zinc containing the lead.

5.  The process of purifying the zinc as defined in claim 3, wherein the purification in the cadmium column or the cadmium removal column is conducted without heating.

6.  A rectification column for purification under reduced pressure comprising a molded material selected from a group consisting of a metal, a metal alloy and a resin.

7.  A process of purifying a metal comprising the steps of

    introducing one metal selected from a group consisting of aluminum, copper, silver, gold copper and cadmium, and containing an impurity, into a rectification column having a plurality of purification stages: and distilling the metal in the rectification column under reduced pressure for the impurity removal, thereby obtaining the high purity metal.

FIG. 1

Zn-Cd METAL

10

11

RUN-OFF METAL

13

Cd COLUMN

RECTIFIED ZINC (SHG) Zn99.99% OR MORE

8 9

2

1

4

CRUDE ZINC Zn98.5%

Pb COLUMN

RUN-OFF METAL (Pb rich)

# FIG. 2A

# FIG. 2B

# FIG. 3

FIG. 4A

FIG. 4B

LOWER
CONCENTRATION
PART OF Cd

EP 1 371 739 A1

# FIG. 5

THERMOCOUPLE

REDUCED PRESSURE VESSEL

CYLINDRICAL MEMBER

CONDENSED ZINC

CYLINDRICAL MEMBER

CONDENSED ZINC

HEATING ELEMENT

ELECTRIC FURNACE

THERMOCOUPLE

GRAPHITE CRUCIBLE

MOLTEN ZINC ALLOY

WATER-COOLING JACKET

WATER-COOLING JACKET

CONDENSER

VACUUM PUMP

# FIG. 6

# FIG. 7

# FIG. 8

EP 1 371 739 A1

## FIG. 9A

DISTILLATION EFFICIENCY (—) vs TEMPERATURE (°C)

PRESSURE:190Pa

Pb

## FIG. 9B

TEMPERATURE

VAPOURUS LINE (GAS-LIQUID EQUILIBRIUM)

$a_1$

$b_1$

LIQUIDUS LINE

VAPOURUS LINE (IN CONSIDERATION OF DROPLET ACCOMPANIMENT)

※ Pb CONCENTRATION INCREASE

Pb      Zn

## FIG. 10A

FIG. 10A — Graph: DISTILLATION EFFICIENCY (−) vs TEMPERATURE (°C). PRESSURE:190Pa. Cd.

## FIG. 10B

FIG. 10B — TEMPERATURE vs composition (Zn to Cd). VAPOURUS LINE (GAS-LIQUID EQUILIBRIUM), $a_2$, $b_2$, LIQUIDUS LINE, VAPOURUS LINE (IN CONSIDERATION OF DROPLET ACCOMPANIMENT), ※ Cd CONCENTRATION INCREASE.

EP 1 371 739 A1

# FIG. 11

# FIG. 12

# FIG. 13

| INTERNATIONAL SEARCH REPORT | International application No. |
|---|---|
| | PCT/JP01/10957 |

A.  CLASSIFICATION OF SUBJECT MATTER
    Int.Cl⁷    C22B9/02, 11/02, 13/02, 15/00, 17/02, 19/32,
             21/06

According to International Patent Classification (IPC) or to both national classification and IPC

B.  FIELDS SEARCHED

Minimum documentation searched (classification system followed by classification symbols)
    Int.Cl⁷    C22B1/00-61/00

Documentation searched other than minimum documentation to the extent that such documents are included in the fields searched
    Jitsuyo Shinan Koho          1926-1996      Toroku Jitsuyo Shinan Koho  1994-2002
    Kokai Jitsuyo Shinan Koho   1971-2002      Jitsuyo Shinan Toroku Koho  1996-2002

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 54-107422 A (Nippon Mining Co., Ltd.), 23 August, 1979 (23.08.1979), Claims; page 2, lower right column, line 16 to page 3; lower right column, line 6; Fig. 1  (Family: none) | 1-5,7 |
| X | JP 6-108175 A (Aichi Steel Works Ltd.), 19 April, 1994 (19.04.1994), Claims; Par. No. [0010]; Table 1; Fig. 1 (Family: none) | 1-3,6,7 |
| X | JP 36-9157 B1 (The National Smelting Co., Ltd.), 30 June, 1961 (30.06.1961), page 1, left column, lines 13 to 24; page 1, right column, lines 32 to 33; page 2, left column, lines 46 to 48; page 2, right column, lines 9 to 12; Fig. 2 (Family: none) | 1,2,6,7 |
| X | JP 36-14110 B1 (The National Smelting Co., Ltd.), 23 August, 1961 (23.08.1961), page 1, left column, lines 34 to 39; page 1, right column, lines 12 to 13; page 1, right column, lines 19 to 25; Fig. 1  (Family: none) | 1,2,6,7 |

☐  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| 15 January, 2002 (15.01.02) | 29 January, 2002 (29.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)